# EUROPÄISCHE PATENTANMELDUNG

(11) **EP 0 604 704 A1**
(43) Veröffentlichungstag der Anmeldung: **06.07.1994**
(21) Anmeldenummer: 93112449.9
(22) Anmeldetag: 04.08.1993
(51) Int. Cl.: F16K 5/06

(54) **Kugelventil mit Dichtungsmitteln für das Verschlussteil**

(30) Priorität: 27.11.1992 IT MI922725
(71) Anmelder: GIACOMINI INDUSTRIALE S.p.A., I-28017 S. Maurizio d'Opaglio (IT)
(72) Erfinder: Giacomini, Mario, Boleto (Madonna del Sasso (IT)
(74) Vertreter: Mayer, Hans Benno, Dipl.-Ing.

(57) **Zusammenfassung**

Kugelventil mit Dichtungsmitteln fuer das Verschlussteil, wobei das Verschlussteil (3) im Querschnitt profilierte Dichtungsmittel aufweist, die unter Zuhilfenahme von gegen das Dichtungsmittel umbiegbare Ringflanschen (26,27) im Verschlussteil blockierbar sind.

## Beschreibung

Die vorstehende Erfindung betrifft ein Kugelventil mit Dichtungsmitteln Euer das Verschlussteil, gemaess dem Oberbegriff des Anspruches 1.

Bei bekannten Ventilen besteht das kugelfoermige Verschlussteil aus einem einzigen Bauteil mit einer zylinderfoermigen Verlaengerung zur Lagerung des Verschlussteiles sowie mit einem Betaetigungsgriff.

Die Dichtungsmittel bestehen bei bekannten Ventilen meistens aus einer Beschichtung aus Gummi oder einem aehnlichen Material, das den gesamten kugelfoermigen Koerper des Verschlussteiles sowie das zylinderfoermig ausgebildete Lagerteil ummantelt, wobei die meistens aus Gummi bestehende Ummantelung ein ringfoermiges Dichtungsmittel bildet. Der Dichtungsring arbeitet mit einem Aufnahmesitz zusammen, der in eine halsartige Verlaengerung des Ventilkoerpers eingearbeitet ist. Die halsartig ausgebildete Verlaengerung des Ventilkoerpers ist nach aussen hin offen und koaxial zum Aufnahmesitz fuer das Verschlussteil ausgebildet und nimmt Einstelleinrichtungen auf, die vom Absperrglied abnehmbar sind.

Die bekannten Ventile, die mit einem beschichteten Verschlussteil ausgeruestet sind, erlauben es, auf die bekannten, sich gegenueberliegenden Dichtungen, die die Absperrmittel aus Metall und mit geschliffener Oberflaeche umgeben, zu verzichten. Ferner wird es ermoeglicht, die Laengsabmessung des Ventilkoerpers zu reduzieren. In der Praxis hat sich aber bei derartigen Ventilen herausgestellt, dass die mit einem beschichteten, kugelfoermigen Verschlussteil ausgeruesteten Ventile mehrere Nachteile haben.

Das einstueckige Bauteil, bestehend aus Verschlussteil, zylindrischem Lagerteil und Betaetigungsgriff, kann durch einen Spritzgussvorgang hergestellt werden; im Anschluss daran ist das Bauteil mit der die Abdichtung bildenden Beschichtung durch einen weiteren Fertigungsvorgang zu ummanteln. Es sind hohe Ver- arbeitungsgenauigkeiten und grosse Oberflaechenguete fuer die Aussenflaeche, die zur Abdichtung herangezogen wird, erforderlich. Dies bedingt den Einsatz aufwendiger Fertigungsverfahren, was sich nachteilig auf die Fertigungskosten auswirkt. Des weiteren ist ein grosser Aufwand an teuerem Dichtungsmaterial erforderlich. Die Fertigung unterliegt einer niedrigen Ausstossquote, und der auftretende Fertigungsaufwand ist erheblich. Kleine Ungenauigkeiten in den Abmessungen und der Oberflaechenbearbeitung koennen die Abdichtwirkung negativ beeinflussen oder zu einer Schwergaengigkeit beim Oeffnen und Schliessen des Ventils fuehren.

Es ist Aufgabe der vorstehenden Erfindung, ein Kugelventil gemaess dem Oberbegriff des Anspruches 1 zu schaffen, mit dem die Nachteile der bekannten Ventile vermieden werden koennen und die Fertigung des Verschlussteiles durch spanabhebende Bearbeitung in automatischen Maschinen billig und rationell erfolgen kann. Die Aufwendungen fuer das Abdichtmaterial sind ausgesprochen bescheiden und ein genaues und zuverlaessiges Verbinden des Abdichtmaterials, unter Einsatz von automatischen Maschinen, mit dem Traegermaterial wird ermoeglicht.

Bei einem Kugelventil gemaess dem Oberbegriff des Anspruches 1 wird die erfindungsgemaesse Aufgabe dadurch geloest, dass die Dichtungsmittel am Verschlussteil aus wenigstens einem im Querschnitt profilierten Dichtungsring bestehen, dass der Dichtungsring in einer Ringnut angeordnet ist, die in einer Ebene in das Verschlussteil eingearbeitet ist und die Ebene parallel zur Drehachse des Verschlussteiles und zur Durchgangsbohrung des Verschlussteiles angeordnet ist und mit dem sich in Absperrstellung befindlichen Verschlussteil einem vom Verschlussteil absperrbaren Ventilsitz im Ventilkoerper gegenueberliegt und dass im Verschlussteil benachbart zu wenigstens einem Rand der Nute Ansaetze vorgesehen sind, die zum Festlegen der Dichtung gegen die Dichtung verformbar sind.

Es wird ein Ventil mit verdoppelter Dichtwirkung dadurch geschaffen, dass die Dichtungsmittel am Verschlussteil eine zweite im Querschnitt profilierte Dichtung aufweisen, die in einer zweiten Nut angeordnet ist, die parallel und gegenueberliegend zur Nute zur Aufnahme der ersten Dichtung angeordnet ist.

Es ist eine einfache und genaue Fertigung der Verschlussteile durch spanabhebende Bearbeitung in bekannten automatischen Maschinen, die z.B. Dreh- und Fraesvorgaenge durchfuehren, dadurch moegliche, dass die verformbaren Ansaetze zwei konzentrisch, parallel zueinander angeordneten Ringflanschen bestehen, die eine U-foermige Nut begrenzen und die vor Montage der Dichtungen in das Verschlussteil senkrecht zur Drehachse des Absperrgliedes im Ventilkoerper ausgerichtet sind.

Es ist eine genaue Anordnung, ohne Auftreten von oertlichen Druckbelastungen, die den gleichmaessigen Verlauf des Aussenprofiles der Dichtungen nach ihrer Montage beeinflussen koennte, dadurch moeglich, dass nach Einsetzen der Dichtung und vor Verformen der ringfoermigen Flansche, zwischen dem Nutgrund und der Bodenflaeche der Dichtungen ein keilfoermiger Freiraum verbleibt. Es koennen Dichtungen verwendet werden, die automatisch und genau in die Aufnahmenuten einsetzbar sind und eine grossflaechige, profilierte Oberflaeche als Abdichtflaeche aufweisen, die ein optimales Zusammenwirken mit den Abdichtflaechen im Ventilkoerper gewaehrleisten.

Dies geschieht dadurch, dass die ringfoermige Dichtung eine innere zylinderfoermige Oberflaeche sowie eine Bodenflaeche, aufweisen, die mit der inneren Zylinderflaeche einen Winkel von 90° oder von mehr als 90°, z.B. zwischen 91° und 95°, einschliesst und eine bogenfoermige aeussere Oberflaeche aufweist, die eine Abdichtflaeche sowie seitliche Anschlagflaechen festlegt.

Die mit der Erfindung erreichten Vorteile sind im wesentlichen darin zu sehen, dass nicht nur die Ventilkoerper der Kugelventile, sondern auch die Verschlussteile auf automatischen Maschinen herstellbar sind und somit einfach und mit geringen Kosten gefertigt werden koennen.

Ein weiterer Vorteil ist darin zu sehen, dass ein Blockieren der Dichtungsmittel durch Verformen der Ringflansche und Bildung einer konischen Aufnahme, ein sicheres Festlegen und eine genaue Lageanordnung der im Querschnitt profiliert ausgebildeten Dichtungen moeglich wird, was zu einer zuverlaessigen Abdichtwirkung fuehrt.

Quetschungen und Verspannungen der Abdichtmittel, die zu einer Verminderung der Dichtwirkung fuehren koennten, werden vermieden.

Ein weiterer Vorteil der Erfindung ist darin zu sehen, dass bereits eine gute Dichtwirkung bei Verwendung nur einer einzigen Dichtung erzielt wird. Bei Verwendung von zwei Dichtungen wird ein Ventil geschaffen, das eine doppelte Dichtwirkung aufweist und mit niedrigen Fertigungskosten herstellbar ist.

Es ist naheliegend, dass die Fertigungskosten bei Kugelventilen von erheblicher Bedeutung sind, da es sich bei Kugelventilen meistens um Massenprodukte der Großserienfertigungen handelt.

Die Verschlussteile koennen einstueckig zusammen mit dem zylinderfoermig ausgebildeten Lagerstueck ausgebildet sein. Dies fuert dazu, dass die Verschlussteile entweder ueber einen Betaetigungshebel, der ueber eine Schraube befestigt ist, oder ueber einen Antriebsmotor betaetigt werden koennen. Somit koennen die Verschlussteile in Standardausfuehrung hergestellt werden. Die Verschlussteile sind in vorteilhafter Weise mit einer Bohrung ausgeruestet, die sich koaxial zur Drehachse erstreckt und die Durchgangsbohrung des Absperrgliedes schneidet. Aus diesem Grunde sind die Verschlussteile fuer alle Ventilkoerper einsetzbar, die auf unterschiedliche Weise betaetigt werden und beliebige geradlinige oder winkelfoermige Ventilkoerper aufweisen, z. B. bestehend aus einem oder mehreren Bauteilen. Es wird stets eine kurze Baulaenge fuer das Ventil erreicht.

Zwei Ausfuehrungsbeispiele des erfindungsgemaessen Kugelventils sind in den Zeichnungen dargestellt; es zeigen:
Fig. 1 einen Laengsschnitt durch ein Kugelventil mit einem Verschlussteil, das mit zwei Dichtungen ausgeruestet ist und sich in Absperrlage befindet;
Fig. 2 eine Schnittdarstellung des Ventils nach Fig. 1 mit dem Verschlussteil in Durchflusslage;
Fig. 3 eine Seitenansicht des Verschlussteils gemaess Pfeil A in Fig. 4;
Fig. 4 eine Vorderansicht des Verschlussteils zur Aufnahme einer einzigen Dichtung;
Fig. 5 eine Seitenansicht des Verschlussteils gemaess Pfeil B der Fig. 4;
Fig. 6 eine Draufsicht des Verschlussteils nach Fig. 3;
Fig. 7 einen Schnitt entlang Linie VII-VII der Fig. 4;
Fig. 8 einen Vertikalschnitt des Verschlussteils nach Fig. 4 in Zeichnungsebene in vergroessertem Maßstab, mit einer eingesetzten Dichtung vor deren Lagefestlegung; und
Fig. 9 einen Querschnitt in vergroessertem Maßstab durch eine Dichtung.

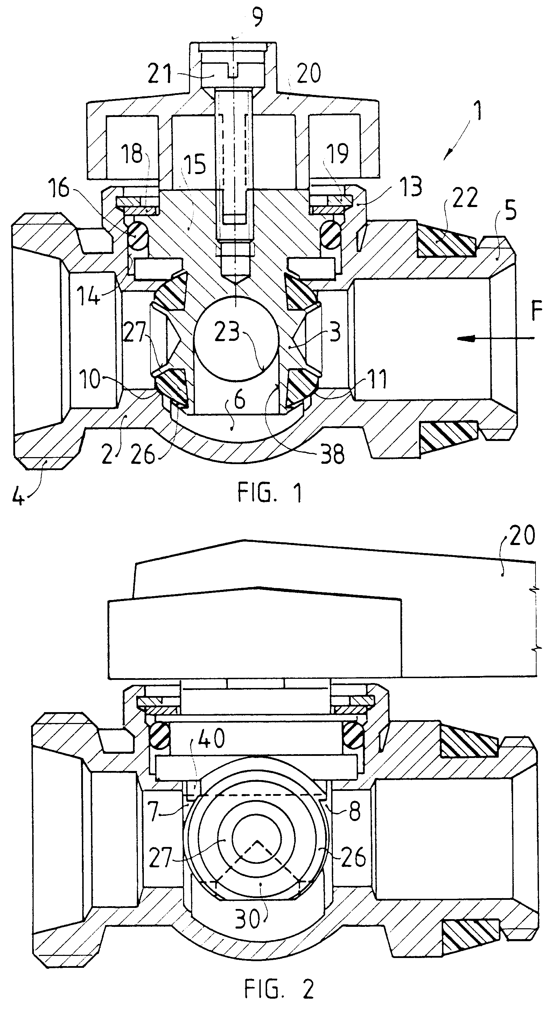

In den Fig. 1 und 2 ist als Beispiel ein Kugelventil 1 dargestellt, das zum Beispiel fuer das Entleeren von Wasser aus Heizkesseln dient.

Das Ventil 1 besteht aus einem Ventilkoerper 2 und einem Verschlussteil 3. Der Ventil- koerper 2 weist einen Auslaufstutzen 4 und einen Einlaufstutzen 5 auf; beide Stutzenoeffnungen muenden im Inneren des Ventilkoerpers 2 in eine Kammer 6, die das Verschlussteil 3 aufnimmt, und zwar in Ebenen 7 und 8, die vom Verschlussteil 3 absperrbare Ventilsitze 10 und 11 bilden. Die Ebenen 7 und 8 liegen sich gegenueber und sind parallel zueinander als auch zur Drehachse 9 des Absperrgliedes 3 angeordnet.

Der Ventilkoerper 2 weist eine halsartige Verlaengerung 13 auf, in die ein Aufnahmesitz 14 eingearbeitet ist, der zur Aufnahme und Lagerung des zylinderfoermigen Teiles 15 des Verschlussteiles 3, unter Zwischenschaltung von ringfoermigen entnehmbaren Dichtungsringen 16 dient. Eine bekannte Befestigungseinrichtung, fuer das Bauteil 15, besteht aus einer Scheibe 18 und einem Federring 19.

Das Verschlussteil 3 ist um 90° verschwenkbar gelagert, um von einer Oeffnungslage in eine Absperrlage verdreht zu werden. Dies erfolgt ueber einen Betaetigungsgriff 20, der am Absperrglied 3 mittels einer Schraube 21 montiert ist.

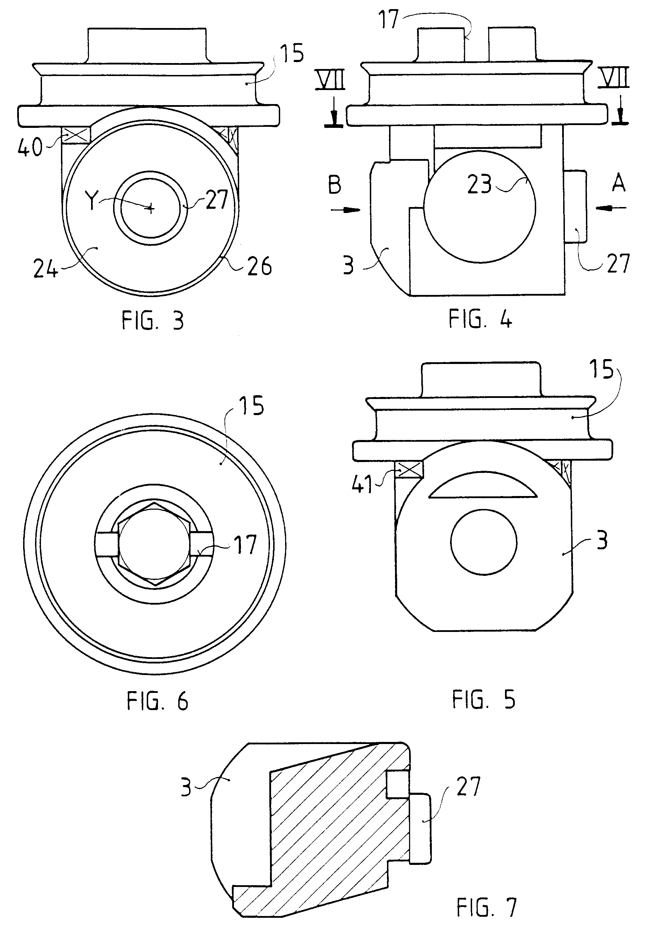

Eine Antriebsrippe oder aber drei nicht dargestellte Antriebs- rippen treten mit der Nut 17 des Absperrgliedes 3 gemaess Fig. 4 und 6 in Wirkverbindung. Mit 22 ist eine ringfoermig ausgebildete Dichtung am Stutzen 5 gekennzeichnet.

Erfindungsgemaess wird die Abdichtung des Verschlussteiles im Ventilkoerper 2 in Richtung des mit einem Pfeil F gekennzeichneten Fluessigkeitsflusses ueber eine oder zwei ringfoermige Dichtungen erzielt, die direkt auf dem Verschlussteil 3 angebracht sind.

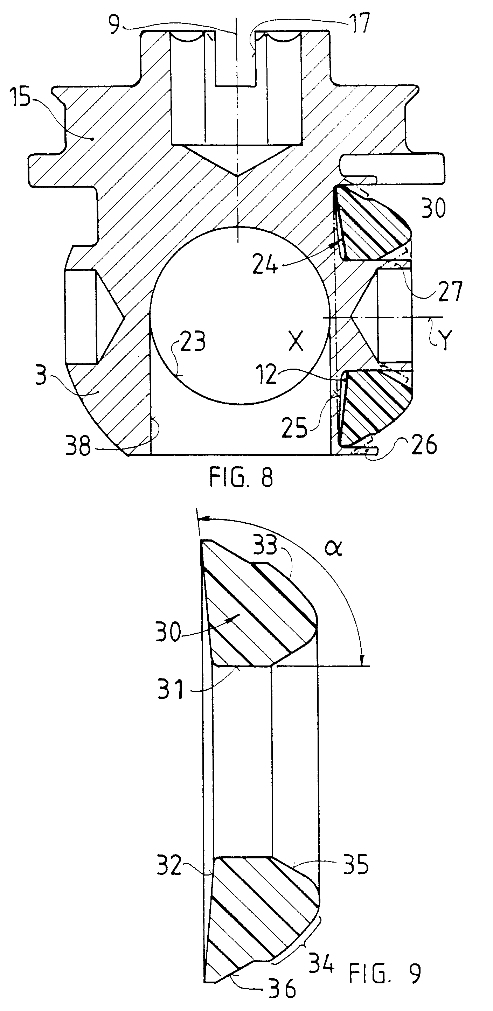

Bei Verschlussteilen mit nur einem Dichtungsmittel, wie in Fig. 3 bis 8 gezeigt, ist in der Ebene X des Verschlussteiles, Ebene die sich parallel zur Drehachse des Verschlussteiles und zur Durchgangsbohrung 23 des Verschlussteiles gemaess Fig. 8 erstreckt, eine Nut 24 eingearbeitet, die in vorteilhafter Weise U-foermigen Querschnitt aufweist. Bei sich in Absperrlage befindlichem Verschlussteil 3 ist die Nute 24 gegenueber einem der abzusperrenden Ventilsitze 7, 8 des Ventilkoerpers angeordnet.

Die Nut 24 weist einen Boden 25, sowie zwei fluegelartig abstehende Ansaetze 26, 27 auf, die duenne Ringflansche bilden. Die Ringflansche 26, 27 sind konzentrisch und senkrecht zur Drehachse 9 des Absperrgliedes angeordnet. In vorteilhafter Weise ist der Boden 25 der Nut 24 leicht zur Aussenseite des Verschlussteiles auseinderanderlaufend dargestellt. Die Dichtung 30 weist eine zylinderfoermig ausgebildete Innenflaeche 31, eine Bodenflaeche 32, sowie eine aussenliegende kurvenartig verlaufende Flaeche 33 auf, die die eigentliche Abdicht- flaeche 34 bildet. Ferner sind seitliche ringfoermig ausgebildete Begrenzungsflaechen 35 und 36 vorgesehen.

Die Begrenzungsflaeche 36, die vergroesserten Durchmesser aufweist, ist geneigt ausgebildet. Der Winkel α, der zwischen der inneren Flaeche 31 und der Bodenflaeche 32 des Dichtungsmittels 30 gebildet ist, entspricht 90° oder in vorteilhafter Weise, wie zeichnerisch dargestellt, einem Winkel groesser als 90°, in vorteilhafter Weise einem Winkel zwischen 90° und 95°.

Die Montage des Dichtungsringes geschieht wie folgt:
Nach Einsetzen des Dichtungsringes 30 in die Nut 24 (Fig. 8) erfolgt ein Blockieren des Dichtungsringes 30, unter gleichzeitiger konischer Verformung der Ringflansche 26, 27 gegen die Dichtung 30, d.h. gegen die Anschlagzonen 36 und 35, wie dies mit Strichpunktlinien der Fig. 8 zu entnehmen ist. Der Ringflansch 26 wird nach innen und der Ringflansch 27 nach aussen hin abgebogen, indem ein Druck in Richtung der gemeinsamen auf die gemeinsame Achse Y ausgeuebt wird. Waehrend des Biegevorganges wird die Dichtung 30 gegen den Boden 25 der Nute 24 gedrueckt und nimmt genau jene Lage ein, in welcher die bogenfoermig ausgebildete Dichtungsflaeche 34 die Kugelflaeche des Absperrgliedes 3 vervollstaendigt. Ein bogenfoermig ausgebildetes Profil dieser Art ist in abzusperrende Ventilsitze 10 und 11 eingearbeitet.

Bei dem in den Figuren 1 und 3 dargestellten Ventilkoerper kann das Verschlussteil eine doppelte Abdichtwirkung entfalten. Zu diesem Zweck sind im Verschlussteil nicht eine Dichtung 30, sondern zwei Dichtungen 30 angeordnet.

Die Dichtungsmittel sind, wie bereits beschrieben, in Nuten 24 angeordnet, die in Ebenen X angeordnet sind, die symmetrisch zur Drehachse 9 des Absperrgliedes 3 und parallel zur Achse der Durchgangsbohrung 23 zu liegen kommen.

Die dargestellten Absperrglieder 3 weisen in vorteilhafter Weise eine Bohrung 38 auf, die koaxial zur Drehachse 9 angeordnet ist und in die Durchgangsbohrung 23 muendet, um dadurch die Verwendung der Absperrglieder sowohl in geradlinig ausgebildeten Ventilgehaeusen, als auch in abgewinkelt ausgebildeten Ventilgehaeusen vorzusehen.

Der Verdrehwinkel von 90° des Absperrgliedes wird durch Anschlaege 40, 41 festgelegt, die am Absperrglied 3 vorgesehen sind und an Seitenflaechen 7 und 8 anschlagen, die die abzusperrenden Durchflussoeffnungen 10 und 11 aufweisen.

Waehrend des Betriebes ermoeglichen die Dichtungen 30 bei geoeffnetem Ventil, Fig. 2, einen freien Durchfluss der Fluessigkeit durch den Ventilkoerper. Durch Verdrehen des Absperrgliedes um 90° wird der Durchfluss durch die Durchgangsbohrung 23, zwischen den Stutzen 4 und 5, unterbrochen. Bei Verwendung eines Verschlussteiles mit einer Dichtung liegt das Dichtungsmittel abdichtend an dem Ventilsitz 10 oder 12 an, wodurch kein Durchfluss der Fluessigkeit moeglich ist. Bei Verwendung eines Absperrgliedes mit zwei Dichtungen wird durch jede Dichtung eine Durchflussoeffnung 10 abgesperrt.

Die Ausbildung der Dichtungen nach Art von Sektoren, die durch Kugelflaechen begrenzt werden, sowie die Ausbildung der absperrbaren Durchflussoeffnungen und die Ausbildung der Nuten zur Aufnahme der Dichtungen, koennen durch technisch gleichartige Loesungen ersetzt werden.

## Patentansprüche

1. Kugelventil mit Dichtungsmitteln fuer das Verschlussteil und einem Ventilkoerper, in dessen Kammer zur Aufnahme des Absperrgliedes die Einlassoeffnung sowie die Auslassoeffnung einmuenden, wodurch zwei sich gegenueberliegende durch das Absperrglied absperrbare Ventilsitze gebildet werden, **dadurch gekennzeichnet**, dass die Dichtungsmittel am Absperrglied (3) aus wenigstens einem im Querschnitt profilierten Dichtungsring (30) bestehen, dass der Dichtungsring (30) in einer Ringnut (24) angeordnet ist, die in einer Ebene (X) in das Verschlussteil (3) eingearbeitet ist und die Ebene (X) parallel zur Drehachse (9) des Verschlussteiles und zur Durchgangsbohrung (3) des Verschlussteiles angeordnet ist und mit dem sich in Absperrlage befindlichen Verschlussteil (3) einem vom Verschlussteil absperrbaren Ventilsitz (10, 11) im Ventilkoerper (2) gegenueberliegt, und dass im Absperrglied (3) benachbart zu wenigstens einem Rand der Nute (24) Ansaetze (26, 27) vorgesehen sind, die zum Festlegen der Dichtung (30) gegen die Dichtung (30) verformbar sind.

2. Kugelventil, nach Patentanspruch 1, **dadurch gekennzeichnet**, dass die Dichtungsmittel des Verschlussteils (3) eine zweite im Querschnitt profilierte Dichtung (30) aufweisen, die in einer zweiten Nut (24) angeordnet ist, die parallel und gegenueberliegend zur Nut (24) zur Aufnahme der ersten Dichtung (30) angeordnet ist.

3. Kugelventil, nach Patentanspruch 1 und 2, **dadurch gekennzeichnet**, dass die verformbaren Ansaetze (26, 27) aus zwei konzentrisch zueinander angeordneten Ringflanschen bestehen, die eine U-foermige Nut begrenzen und vor Einsetzen der Dichtungen (30) in das Absperrglied (3) senkrecht zur Drehachse (9) des Absperrgliedes (3) des Ventils (1) ausgerichtet sind.

4. Kugelventil, nach Patentanspruch 1 und 2, **dadurch gekennzeichnet**, dass vor Verformen der Ringflansche zwischen dem Boden (26) der Nuten (24) und dem Boden (32) der Dichtungen (3) ein keilfoermiges Spiel (12) vorgesehen ist.

5. Kugelventil, nach Patentanspruch 1, **dadurch gekennzeichnet**, dass die ringfoermige Dichtung (30) eine zylinderfoermige innere Oberflaeche (31) sowie eine Bodenflaeche (32), die mit der zylinderfoermigen inneren Flaeche (31) einen Winkel (α) von 90°, in vorteilhafter Weise einen Winkel zwischen 91° und 95° einschliesst und eine bogenfoermige aeussere Oberflaeche (33) aufweist, die eine Abdichtflaeche (34) sowie seitliche Anschlagflaechen (35, 36) festlegt.
